# FASCICULE DE BREVET EUROPEEN

(11) **EP 3 530 582 B1**
(45) Date de publication et mention de la délivrance du brevet: **26.05.2021**
(21) Numéro de dépôt: 19158694.0
(22) Date de dépôt: 21.02.2019
(51) Int. Cl.: B65D 1/48, B29C 51/12

(54) **SUPPORT DE CONDITIONNEMENT ET PROCEDE DE FABRICATION**
VERPACKUNGSTRÄGER UND HERSTELLUNGSVERFAHREN
PACKAGING MEDIUM AND METHOD FOR MANUFACTURING SAME

(30) Priorité: 23.02.2018 FR 1851575
(43) Date de publication de la demande: 28.08.2019
(73) Titulaire: Virgin Bio Pack, 38320 Eybens (FR)
(72) Inventeur: TRANCHARD, Christophe, 38560 CHAMP SUR DRAC (FR)
(74) Mandataire: Talbot, Alexandre

(56) Documents cités:
- GB-A- 895 097
- US-A1- 2012 292 813

## Description

### Domaine technique de l'invention

L'invention est relative à un support de conditionnement pour denrées alimentaires, notamment à un plateau de conditionnement et/ou à une barquette de conditionnement aisément réalisables et offrant une résistance optimale et durable à la déformation. L'invention concerne également un procédé de réalisation de tels supports de conditionnement.

### État de la technique

Dans le domaine du conditionnement des produits, notamment des produits alimentaires, il est courant d'utiliser un contenant qui définit une cavité borgne destinée à recevoir la denrée alimentaire. La cavité est refermée au moyen d'un couvercle ou d'un opercule. Le contenant comporte une paroi interne qui est réalisée dans un matériau neutre vis-à-vis de la denrée alimentaire à conserver. La paroi externe du contenant est utilisée pour délivrer des informations relatives au produit conservé dans le contenant et à titre promotionnel. De manière classique, le contenant est réalisé en matière plastique car il permet d'assurer une bonne isolation du produit vis-à-vis du milieu extérieur. Afin de réduire l'empreinte environnementale du contenant, l'épaisseur de matière plastique est réduite ce qui se traduit par un affaiblissement des propriétés mécaniques du contenant. Par ailleurs, lorsque le contenant se déforme, cela renvoie une image négative vis-à-vis du produit associé ce qui est préjudiciable.

L'épaisseur de film plastique étant réduite, cela oblige à changer la construction du contenant. Le contenant est formé par une enveloppe externe en carton qui est recouverte par une paroi interne en matériau plastique pour protéger les denrées alimentaires des agressions extérieures.

Pour faciliter la fabrication de ce type de support, l'enveloppe externe est formée de manière à définir une cavité et la paroi interne est collée continûment à l'enveloppe externe. Une telle construction est particulièrement difficile à mettre en oeuvre et coûteuse car l'enveloppe en carton doit être pliée et collée afin de définir sa forme avant d'installer la paroi interne en plastique. Il apparait également que cette construction est sujette à des déformations importantes de sa structure dans le temps ce qui limite l'intérêt de cette solution lorsque la denrée alimentaire peut être conservée sur une période de temps relativement longue. Lorsque l'enveloppe en carton vieillit, elle se déforme ce qui entraine une déformation générale de la barquette. L'aspect général du conditionnement est dégradé ce qui renvoie un a priori négatif sur le produit même si ce dernier est parfaitement protégé par le film plastique.

Le document US2012/0292813 décrit la réalisation d'une barquette avec adjonction de renforts locaux par injection d'un matériau de renfort autour de la barquette. Le document GB 895097 décrit la réalisation d'un récipient pourvu de renforts annulaires en matériaux plastiques qui sont collés sur les faces internes et externes du récipient.

### Objet de l'invention

Il existe un besoin de réaliser un support de conditionnement résistant mieux à la déformation structurelle, due notamment au vieillissement et à l'interaction du support avec son environnement au cours du temps et dont la teneur en film plastique est réduite.

On tend à atteindre cet objectif au moyen d'un support de conditionnement pour denrées alimentaires comportant :
- une première feuille en matériau thermoformable possédant des première et deuxième faces opposées et définissant une forme tridimensionnelle comportant au moins une cavité, la cavité étant définie par au moins un fond, au moins une paroi latérale et un rebord périphérique supérieur ;
- un premier renfort fixé au rebord périphérique supérieur,
- un deuxième renfort fixé au fond, le deuxième renfort étant dépourvu de contact avec le premier renfort.

Dans un développement, la première feuille est réalisée en matériau polymère et les premier et deuxième renforts sont réalisés dans un matériau choisi parmi le carton, le métal et le bois ou un mélange de ces matériaux et notamment un mélange de plastique et de bois ou un mélange de plastique et de carton. Dans un mode de réalisation avantageux, le premier renfort est configuré pour recouvrir partiellement la au moins une paroi latérale. Le premier renfort est préférentiellement fixé à la au moins une paroi latérale. Il est préférable de prévoir que le deuxième renfort soit configuré pour recouvrir partiellement la au moins une paroi latérale et éventuellement que le deuxième renfort soit fixé à la au moins une paroi latérale.

L'invention a également pour objet une barquette ou plateau de conditionnement pour denrée alimentaire dans lequel la barquette comporte un contenant et un couvercle et le contenant et/ou le couvercle sont formés par un support de conditionnement selon l'un des modes de réalisation précédents. Avantageusement, les premier et deuxième renforts sont séparés de la denrée alimentaire par la première feuille ou le plateau est formé par un support de conditionnement selon l'un des modes de réalisation précédents.

L'invention a encore pour objet un procédé de réalisation d'un support de conditionnement qui soit facile et rapide à mettre en œuvre.

On tend à atteindre cet objectif au moyen d'un procédé de conditionnement comportant les étapes suivantes :
a) Procédé de réalisation d'un support de conditionnement consistant à fournir une première feuille
   en matériau thermoformable, un premier renfort et un deuxième renfort ;
b) fournir un moule définissant une première forme tridimensionnelle ;
c) chauffer la première feuille et déformer la première feuille au moyen de la première forme tridimensionnelle du moule de manière à définir une cavité dans la première feuille, la cavité étant définie par un fond, au moins une paroi latérale et un rebord périphérique supérieur.

Le procédé est remarquable en ce qu'une première face de la première feuille et/ou une première face du premier renfort et/ou une première face du deuxième renfort comportent un adhésif,
en ce que le premier renfort est fixé à la première feuille avant la déformation de la première feuille ou durant la déformation de la première feuille pour recouvrir le rebord périphérique supérieur et
en ce que le deuxième renfort est fixé à la première feuille avant la déformation de la première feuille ou durant la déformation de la première feuille pour recouvrir le fond, le deuxième renfort étant distinct du premier renfort.

Dans un développement, le premier renfort et le deuxième renfort forment une deuxième feuille, le deuxième renfort étant monté amovible par rapport au premier renfort au moyen d'au moins une ligne de fracturation. L'étape de déformation est configurée pour ouvrir la ligne de fracturation et séparer le premier renfort et le deuxième renfort.

Dans un mode de réalisation particulier, le moule comporte un élément mobile depuis une première position jusqu'à une deuxième position et l'élément mobile déforme la première feuille et la deuxième feuille dans un même mouvement allant de la première position à la deuxième position.

Avantageusement, la au moins une ligne de fracture est configurée pour dissocier complètement la au moins deuxième région amovible de la première région lors de la déformation de la deuxième feuille.

De manière préférentielle, la deuxième feuille est disposée à l'intérieur de la cavité définie dans la première feuille après l'étape de déformation.

Il est envisagé de prévoir que la deuxième feuille soit disposée à l'extérieur de la cavité définie dans la première feuille après l'étape de déformation.

Dans un mode de réalisation avantageux, la deuxième feuille comporte une première ligne de fracture privilégiée configurée pour dissocier mécaniquement la première région et la deuxième région et une pluralité de lignes de fracture additionnelles configurées pour former des parois de renfort recouvrant la au moins une paroi latérale.

Préférentiellement, la première feuille est réalisée dans un matériau ayant une première température de transition vitreuse inférieure à la température de transition vitreuse ou à la température de dégradation de la deuxième feuille et en ce que la première feuille est chauffée à une température supérieure à la première température de transition vitreuse et inférieure à la deuxième température de transition vitreuse ou à la température de dégradation.

Il est encore possible de prévoir que le support soit un contenant pour denrées alimentaires et/ou que le support soit un couvercle destiné à fermer un contenant pour denrées alimentaires.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente en perspective, de manière schématique, un mode de réalisation d'un support de type plateau;
- les figures 2a et 2b représentent en perspective et en coupe, de manière schématique, un autre mode de réalisation d'un support;
- les figures 3a à 3d représentent, de manière schématique, différentes étapes de réalisation d'un support selon un mode de réalisation ;
- les figures 4 et 5 représentent, de manière schématique, des modes de réalisation d'étapes d'un procédé de réalisation d'un support selon un mode de réalisation.

### Description de modes préférentiels de réalisation

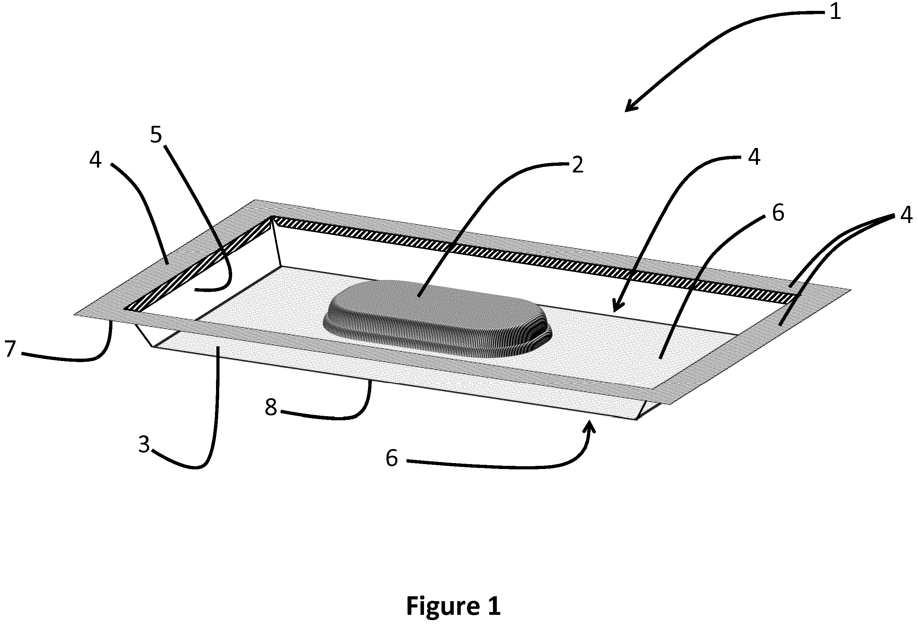

La figure 1 illustre un support de conditionnement 1 avantageusement pour denrées alimentaires. Le support de conditionnement 1 peut être un contenant, par exemple une barquette ou un plateau. Il est également possible de prévoir que le support de conditionnement 1 soit un couvercle destiné à fermer un contenant.

La figure 1 illustre un mode de réalisation dans lequel le support de conditionnement 1 est un plateau destiné à recevoir et/ou présenter et /ou transporter et/ou conserver un produit 2. Le plateau est avantageusement un support de conditionnement 1 dont la largeur et la longueur sont chacune supérieures à la hauteur, de préférence, la largeur et la longueur sont supérieures à deux fois la hauteur encore plus préférentiellement cinq fois la hauteur. Le plateau est un support essentiellement planaire alors que la barquette est un support volumique. Le support de conditionnement 1 comporte une première feuille 3 en matériau thermoformable destinée à être en contact avec le produit 2.

La première feuille 3 possède des première et deuxième faces opposées de sorte que l'une des faces est destinée à être en contact avec le produit 2. La première feuille 3 définit une forme tridimensionnelle qui comporte au moins une cavité. La cavité est définie au moyen d'au moins deux surfaces non coplanaires. De préférence, la cavité définit au moins des première, deuxième et troisième surfaces qui permettent de définir un rebord périphérique supérieur 4, au moins une paroi latérale 5 et un fond 6 pour la cavité. Selon les configurations, la cavité est définie par une seule paroi latérale 5 ou par une pluralité de parois latérales 5.

Le rebord périphérique supérieur 4 définit un premier plan. Le fond 6 définit un deuxième plan différent du premier plan. Dans un mode de réalisation avantageux, le rebord périphérique supérieur 4 définit un plan qui est coplanaire avec le fond 6. Le fond 6 est relié au rebord périphérique supérieur 4 au moyen de la paroi latérale 5. L'ensemble fond 6, parois latérales 5 et rebord périphérique supérieur 4 délimite un volume. Le fond 6 peut avoir une forme quelconque, préférentiellement, le fond 6 a une forme sensiblement rectangulaire ou carrée et le rebord périphérique supérieur 4 se présente sous la forme d'un anneau. Le rebord périphérique supérieur 4 est délimité par un bord périphérique externe et un bord périphérique interne qui présentent préférentiellement la même forme. Dans l'exemple illustré, les deux bords périphériques interne et externe sont représentés sous la forme d'un rectangle. De préférence, le rebord périphérique supérieur 4 a la forme d'une couronne rectangulaire, autrement dit une forme définie à partir de deux rectangles préférentiellement concentriques.

La première feuille 3 peut être réalisée dans un matériau plastique thermoformable de préférence choisi parmi, l'Acrylonitrile Butadiène Styrène (ABS), le polychlorure de vinyle (PVC), le polyméthacrylate de méthyle (PMMA), le polycarbonate (PC), le polypropylène (PP), le polystyrène (PS, PSE, PS-B). Préférentiellement, la première feuille 3 est réalisée en polyéthylène téréphtalate qui est un matériau bien adapté pour les produits de consommation, notamment les produits alimentaires. Avantageusement, la première feuille 3 est choisie parmi le polyéthylène téréphtalate amorphe et le polyéthylène téréphtalate cristallin. La première feuille 3 est réalisée dans un matériau plastique c'est-à-dire dont la recyclabilité est perfectible.

Pour former un support exclusivement en matériau polymère et présentant une rigidité suffisante, il est nécessaire d'utiliser une quantité importante de matériau polymère car l'épaisseur de la première feuille 3 doit être relativement importante. Afin de limiter l'utilisation de matière plastique dans le support 1, il est particulièrement avantageux de rajouter des renforts dans des zones spécifiques qui vont permettre de rigidifier le support 1 afin que ce dernier possède une allure et une dureté compatibles avec l'impression de qualité de la denrée alimentaire à protéger.

De manière avantageuse, l'épaisseur de matériau polymère formant le rebord périphérique supérieur 4 est plus importante que l'épaisseur utilisée pour former les parois latérales et éventuellement le fond 6 de la cavité. De préférence, l'épaisseur moyenne dans le fond 6 de la cavité est supérieure à l'épaisseur des parois latérales. Le rebord périphérique supérieur 4 comporte des zones de préhension privilégiées. Il est donc particulièrement important que cette zone de préhension possède une certaine rigidité pour que l'emballage dégage une impression générale flatteuse. Dans cette configuration, le rebord périphérique supérieur 4 présente une solidité accrue qui facilite sa manipulation par l'utilisateur. Avantageusement, le rebord périphérique supérieur 4 possède un décroché formant l'extrémité périphérique du rebord 4 pour rigidifier le rebord 4.

Afin d'améliorer la rigidité du support, il est avantageux de fixer un premier renfort 7 et/ou un deuxième renfort 8 sur la première feuille 3 en matériau thermoformable. La fixation peut être obtenue par collage, par soudure, par fusion de deux matériaux se trouvant sur la première feuille et sur le renfort. Le premier renfort 7 est fixé au rebord périphérique supérieur 4 de la première feuille 3. Le deuxième renfort 8 est fixé au fond 6. Le deuxième renfort 8 est distinct du premier renfort 7. Le deuxième renfort 8 est dépourvu de contact avec le premier renfort 7, c'est-à-dire qu'il existe un espace 9 entre le premier renfort 7 et le deuxième renfort 8. Le deuxième renfort 8 est solidarisé avec le premier renfort 7 au moyen de la première feuille 3 en matériau thermoformable. Les premier et deuxième renforts 7 et 8 peuvent provenir d'une feuille en plastique, en carton, en bois, un mélange de plastique et bois ou un mélange de plastique et carton. Le premier renfort 7 et le deuxième renfort 8 sont fixés de manière à rigidifier le rebord périphérique supérieur 4 et le fond 6. Cette rigidité accrue dans des zones spécifiques permet d'améliorer la résistance globale du support et de faciliter sa manipulation.

L'agencement spécifique des renforts 7 et 8 avec la première feuille 3 permet de prévenir, au moins retarder, les différentes déformations qui proviennent du vieillissement des différents constituants du support et plus particulièrement des renforts 7 et/ou 8.

Selon un mode de réalisation, le premier renfort 7 et/ou le deuxième renfort 8 peuvent comporter du carton ou de bois ou encore un mélange de plastique et de bois ou un mélange de plastique et de carton. Le bois est un matériau naturel qui respecte les normes environnementales et qui est facilement recyclable. Il en est de même pour le carton. Selon un autre mode de réalisation, le premier renfort 7 et/ou le deuxième renfort 8 peuvent être réalisés dans un matériau choisi parmi : un matériau polymère, un matériau métallique et un matériau composite. Ces matériaux, notamment les matériaux métalliques et les matériaux composites tels que les fibres de carbone et les fibres de verre, possèdent une solidité et une rigidité intéressantes, ce qui permet d'offrir au support une tenue mécanique efficace. En outre, les fibres de verre et les fibres de carbone permettent de réduire le poids du support tout en améliorant ses performances mécaniques. Par matériau polymère, on entend notamment le matériau conventionnellement appelé plastique. En effet, le plastique est réalisé principalement à base d'un polymère brut auquel on ajoute des charges, un plastifiant et d'autres additifs. Les renforts 7 et 8 sont réalisés dans des matériaux dont la filière de recyclage est mieux maitrisée et/ou dont la fabrication consomme moins d'hydrocarbure que la première feuille 3.

Il a été observé, que le renforcement du fond 6 au moyen du deuxième renfort 8 permet de conserver plus longtemps un support qui présente une forme mettant en valeur la denrée alimentaire associée. En effet, si le fond 6 est déformé, l'utilisateur peut douter des conditions de transport ou de stockage du support de conditionnement et donc de l'état du produit 2.

De manière préférentielle, les premier 7 et deuxième 8 renforts recouvrent plus de 50 % de la surface de la feuille thermoformée ce qui permet de rigidifier fortement le support. Avantageusement, les premier 7 et deuxième 8 renforts recouvrent moins de 90 % de la surface de la feuille thermoformée pour éviter que la déformation des renforts, par exemple à cause de l'humidité ne se traduise par une déformation visible du support. Dans un mode de réalisation avantageux, les premier et deuxième renforts 7 et 8 ont une masse qui est supérieure à 50% de la masse totale du support afin de faciliter le recyclage du support.

En renforçant le rebord périphérique supérieur 4 au moyen du premier renfort 7, la tenue mécanique générale du support est accrue et l'impression générale sur la barquette est améliorée. Si le rebord périphérique supérieur 4 est déformé, l'utilisateur soupçonne un choc lors du transport et donc une dégradation de la denrée alimentaire. Pour réaliser un support facile à mettre en oeuvre et présentant une forme qui est conservée dans le temps, il a été observé qu'il est particulièrement avantageux d'avoir des parois latérales 5 partiellement recouvertes par un renfort ou d'avoir des parois latérales 5 dépourvues de renfort. Dans les zones dépourvues de renfort, le support peut être uniquement formé par la première feuille 3. Il est avantageux de prévoir que le renfort recouvrant la paroi latérale 5 soit fixé au premier renfort 7 ou au deuxième renfort 8.

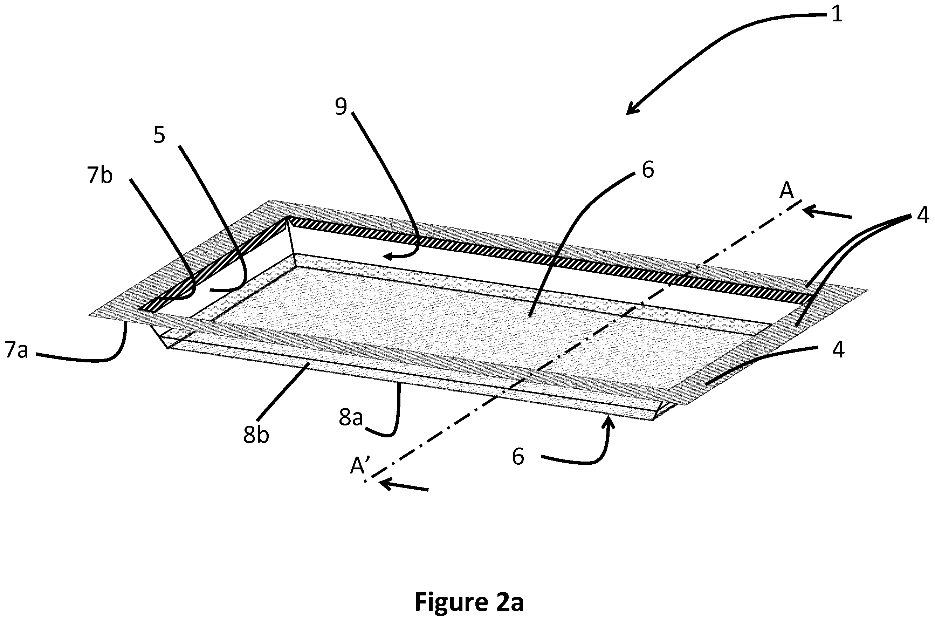

Selon un autre mode de réalisation illustré à la figure 2a, le premier renfort 7 recouvre partiellement une ou plusieurs parois latérales de la cavité. Le recouvrement des parois latérales de la cavité permet de rigidifier le support et ainsi de garder sa forme plus longtemps malgré le vieillissement du renfort et/ou de la première feuille 3. Le premier renfort 7 comporte une première portion 7a qui est fixée sur le rebord périphérique supérieur 4 et une deuxième portion 7b qui est avantageusement fixée sur la paroi latérale 5. Il est également avantageux de prévoir que le deuxième renfort 8 recouvre partiellement une ou plusieurs parois latérales 5 de la cavité. Cette configuration permet également de rigidifier les parois latérales 5 du support. Le deuxième renfort 8 comporte une première pièce 8a qui est fixée au fond 6 et une deuxième pièce 8b qui est avantageusement fixée à la paroi latérale 5. Préférentiellement, les renforts recouvrent au moins 10% de la surface de la paroi latérale associée, de préférence au moins 30%. Comme indiqué plus haut, le premier renfort 7 est dissocié du deuxième renfort 8. Il a été observé que la zone de la paroi latérale 5 dépourvue de renforts peut se déformer. Cette déformation permet de dissocier les contraintes présentes dans le fond 6 de la cavité et les contraintes présentes dans le rebord périphérique supérieur 4. Il a été observé qu'en laissant au moins une partie des parois latérales libres, le support garde plus longtemps sa forme initiale et notamment la forme du rebord périphérique supérieur 4 et éventuellement du fond 6. Cette configuration est particulièrement avantageuse lorsque le premier et/ou le deuxième renforts 8 sont réalisés dans un matériau qui absorbe l'humidité, par exemple le bois ou le carton. Il a été observé qu'un support planaire conserve une forme acceptable par l'utilisateur beaucoup plus longtemps qu'un support volumique.

De manière avantageuse, une paroi latérale 5 ou au moins une paroi latérale 5 est recouverte partiellement par le premier renfort 7 et par le deuxième renfort 8. Dans un mode de réalisation particulier, toutes les parois latérales sont recouvertes par le premier renfort 7 et par le deuxième renfort 8. En utilisant un recouvrement des parois latérales par les deux renforts, les deux extrémités opposées de la paroi latérale 5 sont renforcées ce qui permet de rigidifier le rebord périphérique supérieur 4 et le fond 6. La tenue mécanique générale du support est mieux conservée dans le temps.

Dans un mode de réalisation particulier, chaque paroi latérale 5 est recouverte uniquement par le premier renfort 7 ou par le deuxième renfort 8. De manière avantageuse, le recouvrement est alterné entre le premier renfort 7 et le deuxième renfort 8 sur les parois latérales consécutives. Dans cette configuration, il est possible d'augmenter la longueur de recouvrement par le premier renfort 7 et par le deuxième renfort 8 sans avoir de contact entre les deux renforts. Cette configuration spécifique est particulièrement avantageuse car elle rigidifie les parois latérales différemment ce qui retarde la déformation. De manière préférentielle, la cavité présente une section sous la forme générale d'un carré ou d'un rectangle dont les arêtes sont aplaties pour former des faces latérales additionnelles. Les quatre faces principales du quadrilatère sont avantageusement recouvertes par un renfort commun avec le rebord périphérique supérieur 4 et les arêtes aplaties sont recouvertes par un renfort commun avec le fond 6 de la cavité.

De manière particulièrement avantageuse, la hauteur de recouvrement des parois latérales par le premier renfort 7 et/ou par le deuxième renfort 8 est constante pour toutes les parois latérales. En d'autres termes, si une paroi latérale 5 est recouverte uniquement par le premier renfort 7 et une autre paroi latérale 5 est recouverte uniquement par le deuxième renfort 8, les hauteurs de recouvrement sont identiques. Si une paroi latérale 5 est recouverte par le premier renfort 7 et par le deuxième renfort 8, la somme de la hauteur de recouvrement par le premier renfort 7 et par le deuxième renfort 8 est égale à la hauteur de recouvrement par le premier renfort 7 ou le deuxième renfort 8. La hauteur de recouvrement est mesurée selon l'axe reliant le rebord périphérique au fond 6 et l'axe est défini de sorte que la distance entre le fond 6 et le rebord périphérique supérieur 4 soit minimale. Dans un mode de réalisation particulier, l'axe est perpendiculaire au fond.

De manière particulièrement avantageuse, la distance qui sépare le premier renfort 7 et le deuxième renfort 8 est constante pour toutes les parois latérales. Si la paroi latérale 5 est dépourvue de premier renfort recouvrant la paroi latérale 5, alors la distance de séparation correspond à la distance entre le deuxième renfort 8 et l'extrémité opposée de la paroi latérale 5. Si la paroi latérale 5 est dépourvue de deuxième renfort recouvrant la paroi latérale 5, alors la distance de séparation correspond à la distance entre le premier renfort 7 et l'extrémité opposée de la paroi latérale 5

Dans un mode de réalisation particulier, le premier renfort 7 recouvre partiellement le rebord périphérique supérieur 4. En alternative, le premier renfort 7 recouvre totalement le rebord périphérique supérieur 4. Selon les configurations, le deuxième renfort 8 recouvre partiellement ou totalement le fond 6. De préférence, le recouvrement est réalisé sur au moins 80% de la surface du rebord périphérique supérieur 4 ou du fond 6. De manière avantageuse, le premier renfort 7 et/ou le deuxième renfort 8 sont séparés de la denrée alimentaire par la première feuille 3 en matériau thermoformable.

De manière avantageuse, le premier renfort 7 et le deuxième renfort 8 sont fixés à la première feuille 3 par collage. Selon les configurations, la colle peut être présente uniquement sur une première face du premier renfort 7, sur une première face du deuxième renfort 8, sur une face de la première feuille 3 ou sur toutes les faces en contact. De manière préférentielle, le premier renfort 7 est plus rigide que le rebord périphérique supérieur 4 et/ou le deuxième renfort 8 est plus rigide que le fond 6. Par plus rigide, on entend que le renfort présente une plus faible déformation que le film polymère lorsque ces deux éléments sont soumis à la même sollicitation mécanique.

Les premier et deuxième renforts 8 sont réalisés dans des matériaux différents de la première feuille 3. Cette différence de matériaux entraine une différence de comportement dans le temps. Par exemple, dans un environnement humide, la réaction de ces matériaux est différente et engendre des déformations mécaniques différentes. Puisque la feuille est fixée aux premier et deuxième renforts 8, les différences de déformation mécanique vont engendrer une déformation structurelle du support 1. Il a été observé qu'en fixant le premier renfort 7 avec la majorité de la surface du rebord périphérique supérieur 4, l'interface définit une surface sensiblement plane. Dans le temps, le renfort 7 a tendance à gondoler ce qui est contrebalancé par le rebord périphérique supérieur 4. Le rebord périphérique supérieur 4 reste sensiblement plan. De manière préférentielle, l'ensemble formé par la première feuille 3 et le premier renfort 7 comporte un premier moyen de dissociation amélioré de la connexion mécanique qui existe entre le premier renfort 7 et la première feuille 3. Dans une première configuration, une partie périphérique du rebord périphérique supérieur 4 n'est pas recouverte par le premier renfort 7. De préférence, la partie non recouverte correspond à un coin du rebord périphérique supérieur 4. De cette manière, en tirant sur la première feuille 3 par rapport au premier renfort 7, il est possible de les désolidariser par pelage. En alternative, le premier moyen de dissociation amélioré comporte la première feuille 3 et le premier renfort 7. Le premier renfort 7 possède une ligne de fragilisation qui permet de désolidariser la partie du premier renfort 7 qui fait partie du premier moyen de dissociation amélioré du reste du premier renfort 7. Là encore, il est possible de tirer sur le premier moyen de dissociation pour séparer la première feuille 3 du reste du premier renfort 7.

Les moyens de dissociation peuvent être réalisés par des soudures pelables disposés entre chacun des premier 7 et deuxième 8 renforts et la feuille 3. Le deuxième renfort 8 peut comporter une ouverture, c'est-à-dire une zone vide où la première feuille 3 est accessible afin de former un deuxième moyen de dissociation amélioré du deuxième renfort 8 avec la première feuille 3. L'utilisateur appuie sur la première feuille 3 à travers l'ouverture du deuxième renfort 8 ce qui entraine la désolidarisation.

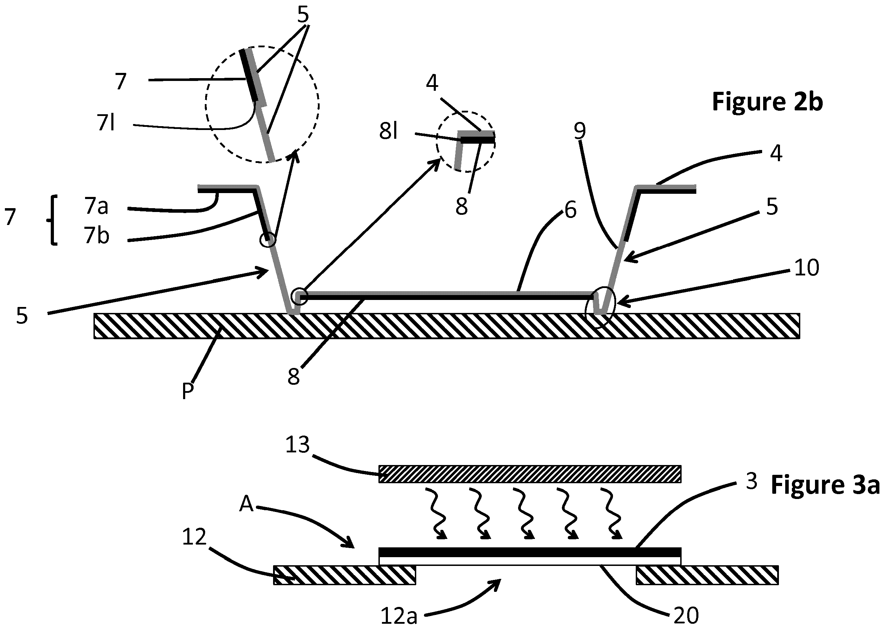

Selon un mode de réalisation illustré à la figure 2b, le fond 6 comporte avantageusement un pied 10 en saillie du deuxième renfort 8. Le pied 10 défini un renfoncement qui peut contenir le deuxième renfort 8. Le pied 10 est configuré pour former un pied d'appui du support qui repose sur un plan d'appui P de sorte que le deuxième renfort 8 soit séparé du plan d'appui P.

Préférentiellement, le fond 6 comporte plusieurs pieds 10 distribués autour du périmètre du fond 6 afin d'assurer la stabilité du support 1 lorsqu'il est disposé sur le plan d'appui P. A titre d'exemple, lorsque le fond 6 a une forme rectangulaire, le fond 6 comporte préférentiellement quatre pieds 10 situés sensiblement aux quatre coins de la forme rectangulaire ou carrée.

En alternative, les pieds sont disposés sur les quatre faces du fond 6 et les arêtes aplaties sont dépourvues de pieds pour permettre l'installation du deuxième renfort 8 sur la paroi latérale 5. Par ailleurs, le pied 10 peut être formé par une seule pièce d'étendant tout le long du périmètre du fond 6 et délimitant le deuxième renfort 8. Il est également possible d'avoir un seul pied 10 par face du périmètre, le pied s'étendant au moins sur 30% de la longueur de la face pour assurer la stabilité.

Un fond 6 muni d'un ou plusieurs pieds 10, permet avantageusement d'assurer une protection du deuxième renfort 8 en le séparant du plan d'appui P sur lequel le support est posé. Selon un mode de réalisation illustré à la figure 2b, le premier renfort 7 et/ou le deuxième renfort 8 recouvrent les parois latérales 5 et la première feuille 3 est avantageusement configurée pour recouvrir les faces latérales du renfort. En d'autres termes, les renforts sont encastrés dans les parois latérales 5 ce qui permet de réduire les risques de désolidarisation des renforts par inadvertance.

Dans un mode de réalisation particulier, la première feuille 3 est configurée pour recouvrir les bords latéraux des renforts 7 et 8 et réduire la diffusion de l'humidité via les bords latéraux. Par exemple, le renfort 7 ou 8 peut avoir sa face externe recouverte par un revêtement bloquant au moins partiellement l'humidité et le bord latéral 7l ou 8l peut être dépourvu de ce revêtement de sorte que la face couverte par la première feuille 3 retarde l'arrivée d'humidité. Par exemple, le renfort est enduit ou stratifié de sorte à comporter une fine couche d'un matériau hydrophobe sur les surfaces en contact avec l'atmosphère extérieure. Cependant, afin de gagner en efficacité, le renfort est formé dans une feuille qui a été traitée avant d'être découpée. Le traitement hydrophobe n'est pas présent sur les bords latéraux qui sont définis lors de la découpe de définition du renfort. La face non traitée est alors recouverte par la première feuille 3.

Le support 10 peut être réalisé par thermoformage de la première feuille 3 et son association aux premier et deuxième renforts 8. Le procédé de réalisation du support de conditionnement 1 peut se présenter de la manière suivante. Dans une première étape, il convient de fournir une première feuille 3 en matériau thermoformable, un premier renfort 7 et un deuxième renfort 8. Il convient également de fournir un moule qui est configuré pour définir une première forme tridimensionnelle. Selon les technologies utilisées, le premier moule peut définir une cavité ou au contraire une zone en saillie. Il est même avantageux de prévoir que le premier moule comporte un moule et un contre-moule qui définissent une cavité et une zone en saillie complémentaire.

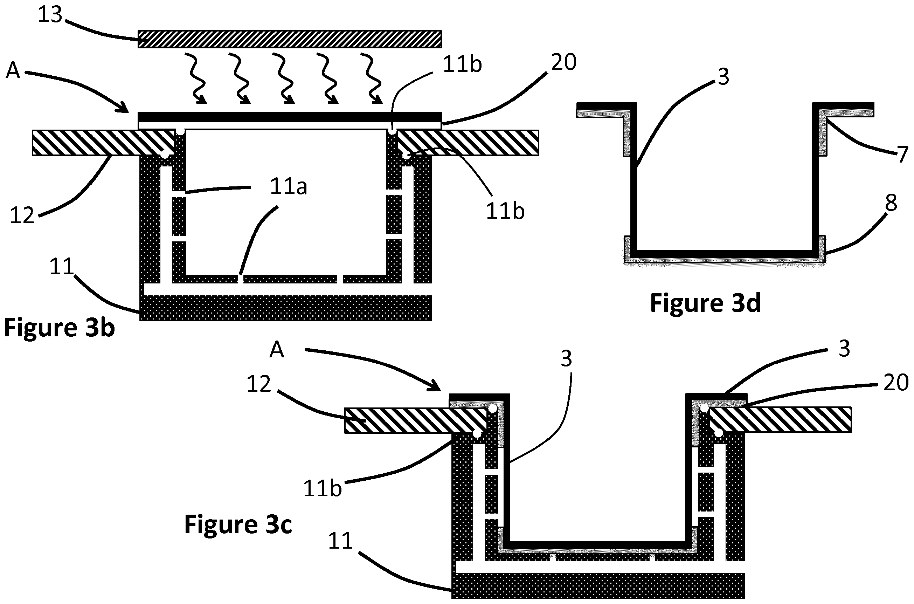

La première feuille 3 est réalisée dans un matériau thermoformable. Comme illustré aux figures 3a et 3b, il est donc particulièrement intéressant de chauffer la première feuille 3 pour faciliter sa déformation à venir. Dans le mode de réalisation de la figure 3a, la feuille thermoformable 3 et une feuille additionnelle 20 forment un empilement A qui est chauffé. La feuille additionnelle 20 définit les renforts 7 et 8.

Comme illustré à la figure 3c, il convient de déformer la première feuille 3 au moyen de la première forme tridimensionnelle du moule. La déformation est configurée pour définir la cavité dans la première feuille 3. La déformation définit une cavité avec un fond 6, au moins une paroi latérale 5 et un rebord périphérique supérieur 4. Par la suite, la première feuille 3 est refroidie pour que la forme de la cavité soit conservée.

Le premier renfort 7 est fixé au rebord périphérique supérieur 4 et le deuxième renfort 8 est fixé au fond 6 afin de former un support tel qu'il a été présenté plus haut et illustré schématiquement à la figure 3d.

Dans un mode de réalisation particulièrement avantageux, le premier renfort 7 est fixé au rebord périphérique supérieur 4 et le deuxième renfort 8 est fixé au fond 6 entre le chauffage de la première feuille 3 et le refroidissement de la première feuille 3. De manière avantageuse, le deuxième renfort 8 se fixe à la première feuille 3 lors de la déformation de la première feuille 3. Il peut en être de même pour le premier renfort 7. La première feuille 3 étant chaude, elle se fixe sur le premier renfort 7 et/ou sur le deuxième renfort 8 par l'intermédiaire d'un revêtement thermo-adhésif dont la capacité à coller est activée par la température.

Dans un mode de réalisation alternatif, la première feuille 3 est fixée au premier renfort 7 et/ou au deuxième renfort 8 avant la déformation de la première feuille 3 et préférentiellement après le chauffage de la première feuille 3. Il est également possible de prévoir que la fixation intervienne avant le chauffage de la première feuille 3. Il est, bien entendu possible, de combiner ces modes de réalisation pour fixer indépendamment le premier renfort 7 et le deuxième renfort 8. Les deux techniques étant aptes à fixer le premier renfort 7 et le deuxième renfort 8. De manière avantageuse, le procédé comporte une étape de placement du premier renfort 7 et/ou du deuxième renfort 8 sur le moule 11 avant de déformer la première feuille 3. De cette manière, lors de la déformation de la première feuille 3, le premier renfort 7 et/ou le deuxième renfort 8 sont placés au bon endroit du support 1.

De manière avantageuse, le premier renfort 7 et le deuxième renfort 8 forment une deuxième feuille ou appartiennent à une deuxième feuille 20. Le premier renfort 7 et le deuxième renfort 8 sont solidaires et ils sont connectés l'un à l'autre par au moins une ligne de fracture privilégiée. En utilisant une deuxième feuille 20 qui comporte les deux renforts, il est possible d'aligner automatiquement les deux renforts en alignant uniquement la deuxième feuille par rapport au moule ce qui facilite la réalisation du support. Préférentiellement, la deuxième feuille 20 et la première feuille 3 sont disposées dans le moule 11 lors de l'étape de déformation de la première feuille 3 et éventuellement lors de l'étape préalable de chauffage de la première feuille 3.

En utilisant la première feuille 3 et la deuxième feuille 20 dans le même moule 11 lors de la déformation de la première feuille 3, il est possible d'aligner le premier renfort 7 par rapport au rebord périphérique supérieur 4 et le deuxième renfort 8 par rapport au fond 6 de manière simple et rapide. Le thermoformage peut être réalisé par des moyens mécaniques par pistonnage ou par emboutissage. Le thermoformage peut être réalisé, dans ce cas, par emboutissage, et le moule 11 peut comporter une première pièce mâle et une deuxième pièce femelle. Selon les configurations, la pièce mâle et/ou la pièce femelle sont des pièces mobiles. En recouvrant toute la surface de la première feuille 3 et/ou la surface des renforts 7 et 8 d'un matériau adhésif, les contraintes d'alignement sont très fortement réduites en comparaison d'une configuration où l'adhésif forme un motif identique aux renforts.

Dans un premier cas de figure, le premier moule comporte une pièce mobile qui se déplace depuis une première position jusqu'à une deuxième position. Lors du mouvement allant de la première position à la deuxième position, l'élément mobile vient en contact de la première feuille 3 puis il déforme la première feuille 3 pour définir la cavité. Il est particulièrement avantageux de prévoir que la première feuille 3 sépare la deuxième feuille 20 et la pièce mobile. Ainsi, dans un même mouvement allant de la première position à la deuxième position, la première pièce déforme la première feuille 3 puis elle déforme la deuxième feuille 20.

Lors de la déformation de la deuxième feuille 20, les lignes de fracture cèdent de sorte que le deuxième renfort 8 se trouve face au fond 6 de la cavité et séparé du premier renfort 7 qui se trouve face au rebord périphérique supérieur 4. Lors de la déformation de la deuxième feuille 20, la structure planaire est modifiée afin de définir la forme tridimensionnelle. L'espace 9 qui sépare les deux renforts 7 et 8 est formé automatiquement lors de la réalisation de la cavité.

Dans un mode de réalisation avantageux, le deuxième renfort 8 est formé à l'intérieur du premier renfort 7 par l'intermédiaire d'une ligne de fracture. La forme du deuxième renfort 8 est complémentaire de la forme du premier renfort 7. Il est alors avantageux de former le premier renfort 7 et le deuxième renfort 8 dans les mêmes matériaux et à partir d'une deuxième feuille 20 homogène. Le premier renfort 7 et le deuxième renfort 8 peuvent être définis simplement en formant une ou plusieurs lignes de fracture dans une deuxième feuille, par exemple une feuille de carton. La ligne de fracture peut être formée par une déformation préalable de la deuxième feuille ce qui la fragilise. La ligne de fracture peut également être formée par des découpes de sorte que le premier renfort 7 est maintenu au deuxième renfort 8 par une pluralité de points d'attache séparés par des ouvertures, par exemple sous la forme de pointillés. Ainsi, les renforts se placent automatiquement sur la paroi externe du support, c'est-à-dire sur la paroi opposée à l'intérieur de la cavité. Dans un autre mode de réalisation, la deuxième feuille 20 sépare la première feuille 3 et la pièce mobile. Ainsi, dans un même mouvement allant de la première position à la deuxième position, la première pièce déforme la deuxième feuille puis elle déforme la première feuille 3.

Pour faciliter la réalisation du support 1, il est particulièrement avantageux de prévoir que la première feuille 3 est en contact avec la deuxième feuille lors de l'étape de déformation. Là encore, l'utilisation d'une deuxième feuille définissant le premier renfort 7 et le deuxième renfort 8 séparés par des lignes de fracture est avantageuse. La pièce mobile déforme la deuxième feuille pour séparer le premier renfort 7 et le deuxième renfort 8 en appuyant sur le deuxième renfort 8.

Le deuxième renfort 8 vient en contact de la première feuille 3 qui se déforme pour former la cavité. Le deuxième renfort 8 est placé contre le fond 6 de la cavité. Dans une autre configuration, la première feuille 3 est fixée à la deuxième feuille 20 avant l'étape de déformation et éventuellement avant chauffage. La deuxième feuille 20 comporte le premier renfort 7 et le deuxième renfort 8. La pièce mobile déforme simultanément la première feuille 3 et la deuxième feuille. Dans ce mode de réalisation, le premier renfort 7 est fixé au deuxième renfort 8 au moyen de la première feuille 3. Les lignes de fractures sont néanmoins avantageuses pour placer précisément le premier renfort 7 par rapport au deuxième renfort 8 avant la fixation avec la première feuille. Selon la configuration, la pièce mobile peut venir en contact de la première feuille ou de la deuxième feuille.

Dans les modes de réalisation où la deuxième feuille sépare la pièce mobile et la première feuille 3, il est avantageux de prévoir que la pièce mobile et le deuxième renfort 8 présentent la même forme de sorte que la pièce mobile définisse des parois latérales qui coïncident avec les bords du deuxième renfort 8 ou débordent légèrement du deuxième renfort 8. Cependant, si le deuxième renfort 8 possède des portions destinées à recouvrir les parois latérales, il est avantageux d'avoir une pièce mobile plus petite que le deuxième renfort 8.

Pour former un premier renfort 7 et/ou un deuxième renfort 8 qui recouvrent partiellement les parois latérales, il est particulièrement avantageux d'utiliser un système de moule et contre-moule pour définir précisément la forme du premier renfort 7 et du deuxième renfort 8 contre le rebord périphérique supérieur 4 et contre le fond 6 et surtout la forme des portions qui recouvrent les parois latérales 5. Pendant l'étape de thermoformage, la première feuille 3 et/ou la deuxième feuille 20 peuvent être fixées sur un cadre 12 qui est disposé entre la pièce mâle et la pièce femelle du moule. Le déplacement des pièces mâle et femelle, l'une vers l'autre, permet alors la structuration de l'empilement 11 et son thermoformage. En alternative, le thermoformage est réalisé par poinçonnage au moyen d'une pièce mâle qui étire la première feuille 3. La première feuille 3 et éventuellement la deuxième feuille 20 sont fixées à un cadre 12 qui comporte une ouverture 12a.

Selon un autre mode de réalisation, le thermoformage peut être réalisé par des moyens pneumatiques en utilisant de l'air ou un autre gaz (aspiration et/ou gonflage), pour déformer la première feuille 3 et éventuellement la deuxième feuille. De préférence, le moule 11 comporte des orifices 11a de petits diamètres, d'environ 0,5 mm. Le moule 11 peut avoir une empreinte ayant une structuration en creux, c'est le cas d'un moule négatif. Par ailleurs, le moule 11 peut également avoir une empreinte ayant une structuration en relief, il s'agit dans ce cas d'un moule positif. Il peut être envisagé d'utiliser un premier renfort 7 et/ou un deuxième renfort 8 ajourés de manière à autoriser l'aspiration de l'atmosphère gazeuse présente dans le moule et plaquer la première feuille 3 et la deuxième feuille contre les parois du moule. Comme précédemment, les renforts peuvent être disposés dans la cavité ou hors de la cavité. Comme indiqué plus haut, pour permettre le thermoformage de la feuille, il est avantageux de chauffer la feuille 3 avant de la déformer. Cette étape de chauffage est réalisée, selon les modes de réalisation, soit en chauffant uniquement la première feuille 3 soit en chauffant la première feuille 3 et la deuxième feuille 20.

L'étape de chauffage est configurée pour chauffer la première feuille 3 à une première température comprise entre la température de transition vitreuse et la température de fusion du matériau formant la première feuille 3 thermoformable. Si le matériau formant le premier renfort 7 et/ou le deuxième renfort 8 présente une température de dégradation inférieure à la température de fusion du matériau formant la première feuille 3 thermoformable, alors l'étape de chauffage est configurée pour chauffer la première feuille 3 à une première température comprise entre la température de transition vitreuse de la première feuille 3 et la température de dégradation. Par température de dégradation, on entend une température au-delà de laquelle les caractéristiques mécaniques et physico-chimiques sont détériorées de manière irréversible.

Préférentiellement, lorsque la feuille thermoformable est réalisée en polyéthylène téréphtalate (APET, CPET), la première feuille 3 est chauffée à une première température comprise entre 85 °C et 200 °C et encore plus préférentiellement, entre 110 °C et 114 °C. Dans ces conditions, les renforts peuvent être en carton ou en bois. Ces matériaux ne se dégradent pas en subissant un chauffage à une température comprise entre 85 °C et 114 °C. L'étape de chauffage peut être réalisée par tout moyen connu dans le domaine du thermoformage, par exemple, au moyen d'une plaque chauffante (chauffage par contact), dans un four, ou en utilisant un équipement à quartz ou encore des panneaux à gaz.

De manière avantageuse, l'étape de déformation est consécutive de l'étape de chauffage. A la fin de l'étape de chauffage, les moyens de chauffage sont arrêtés ou sont retirés et la déformation de la première feuille 3 est réalisée. De manière avantageuse, la déformation de la première feuille 3 est réalisée alors que la zone déformée se trouve au-dessus de sa température de transition vitreuse et les moyens de déformation (mécanique ou pneumatiques) sont arrêtés ou retirés lorsque la température est en-dessous de la température de transition vitreuse. Cependant, il est également possible de réaliser la déformation alors que les moyens de chauffage sont toujours en train de chauffer la première feuille 3. Cette configuration est plus compliquée à mettre en oeuvre ou entraine un allongement du temps de déformation pour éviter que la première feuille 3 change de forme après l'étape de déformation.

A titre d'exemple, les figures 3a et 3b montrent une plaque chauffante 13 qui est utilisée pour chauffer la première feuille 3. Lorsque la température de la première feuille 3 atteint la première température, la ou les plaques chauffantes 13 sont éloignées de la première feuille 3 et/ou éteintes. Autrement dit, les moyens de chauffage ne sont plus configurés pour chauffer la première feuille 3. Ensuite, la première feuille 3 est déformée pour définir la cavité. L'étape de chauffage peut être réalisée en fixant la première feuille 3 sur un cadre 12 définissant une zone vide 12a. Préférentiellement, la première feuille 3 est fixée dans la portion formant le rebord périphérique supérieur 4, tout en laissant libre les parties de la feuille destinées à former le fond 6 et les parois latérales 5. Ensuite, on dispose au moins une plaque chauffante 13 en regard de la première feuille 3. Préférentiellement, la plaque chauffante 13 est une plaque céramique à infrarouge configurée pour irradier la première feuille 3 et/ou une plaque chauffante qui vient chauffer la première feuille 3 par contact. La première feuille 3 est préférentiellement disposée entre deux plaques chauffantes 13, afin d'accélérer le chauffage de la première feuille thermoformable. De manière préférentielle, le thermoformage est réalisé par des moyens pneumatiques en utilisant un moule 11 négatif (figures 3b et 3c). Le moule 11 structure la première feuille 3, qui est à la première température, de manière à déformer la première feuille 3 pour imposer la forme de la cavité de réception du produit 2. Comme illustré à la figure 3c, la première feuille 3 peut être pincée de manière préférentiellement étanche dans un cadre 12. La partie de la première feuille 3 destinée à former le rebord périphérique supérieur 4 et éventuellement la partie de la deuxième feuille destinée à former le premier renfort 7 sont pincées dans le cadre 12. Le reste de la première feuille 3 et de la deuxième feuille est dépourvu de contact direct avec le cadre 12 et il est disposé au-dessus d'un évidemment 12a configuré pour que le moule 11 monte jusqu'à l'empilement 11. Le moule 11 peut comporter un épaulement 11b destiné à venir en butée contre le cadre 12.

Après que le moule 11 soit monté et soit venu en butée contre le cadre 12, la première feuille 3, qui est à la première température, est alors aspirée contre le moule 11 par dépression d'air. Cette dépression est obtenue dans la chambre créée entre la première feuille 3, le cadre 12 et le moule 11 par une aspiration de l'air de ladite chambre réalisée à travers les orifices 11a du moule 11 qui sont reliés à un dispositif pneumatique comportant par exemple une pompe. Le dispositif pneumatique est configuré pour plaquer l'empilement 11 contre les parois internes du moule négatif 11. L'opération d'aspiration permet ainsi de thermoformer la feuille de sorte qu'elle épouse sensiblement la forme du moule 11. Après le thermoformage, le procédé peut également comporter une étape de soufflement d'air à travers les orifices 11a afin de légèrement séparer l'empilement 11 thermoformé du moule 11.

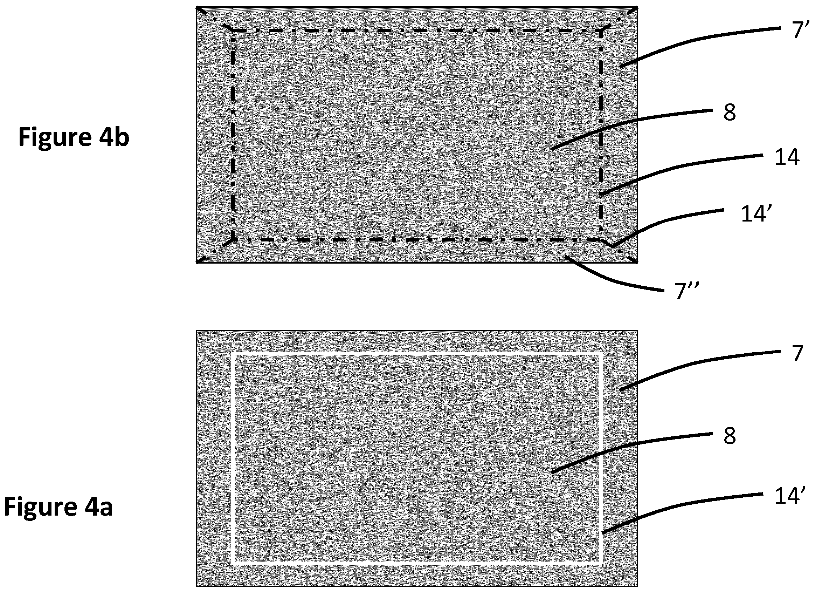

Selon un mode de réalisation illustré à la figure 4a, la deuxième feuille 20 comporte une ligne de fracture 14 configurée pour séparer le premier renfort 7 et le deuxième renfort 8. Selon un mode de réalisation illustré à la figure 4b, la deuxième feuille comporte également une ligne de fracture additionnelle 14' qui fait face à une arête de la cavité et qui est configurée pour séparer deux faces consécutives de la cavité. La ligne de fracture privilégiée sépare une première portion 7' et une deuxième portion 7" du premier renfort 7 qui recouvrent deux parois latérales consécutives après l'étape de déformation de la première feuille 3.

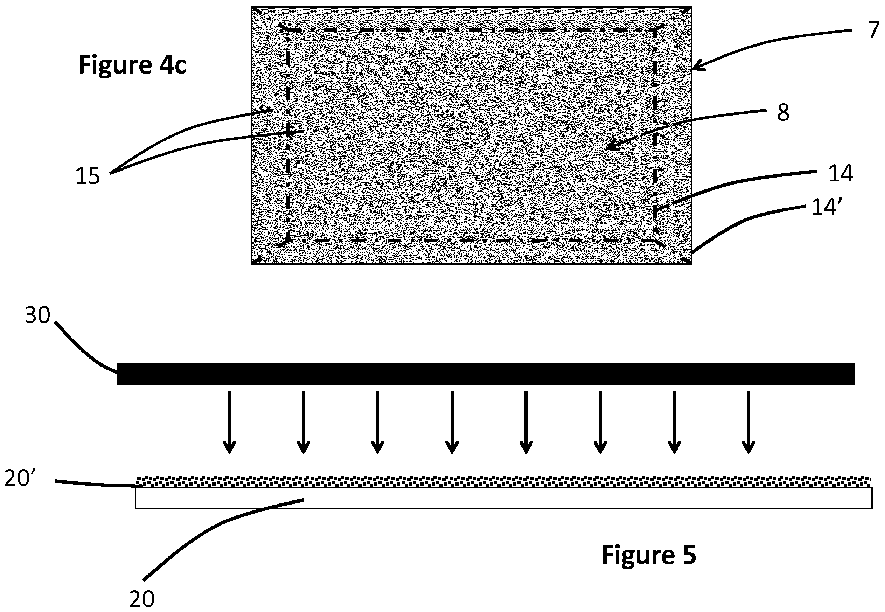

Selon un mode de réalisation avantageux illustré à la figure 4c, le profil de déformation de la deuxième feuille est défini par la ligne de fracturation additionnelle 14' et par une ou plusieurs lignes de pliage 15. La ligne de pliage permet de mieux définir des parois latérales renforcées. Le premier renfort et/ou le deuxième renfort sont alors pliés pour recouvrir les parois latérales de la feuille 3. Préférentiellement, le fond 6 possède une forme rectangulaire avec des arêtes aplaties et le profil d'au moins une ligne de fracture privilégiée 14 est configuré de sorte que le deuxième renfort 8 comporte une languette (non représentée sur les figures) recouvrant l'arête aplatie. De manière encore plus préférentielle, le profil d'au moins une ligne de fracture privilégiée 14 est configuré de sorte que le deuxième renfort 8 comporte une languette pour chaque arête aplatie.

Les languettes permettent avantageusement, d'améliorer la robustesse du support au niveau des coins. Elles permettent également de faciliter la réalisation du support. En effet, ces languettes permettent de guider le positionnement du deuxième renfort 8 au fond 6 du moule 11 pour mieux le placer lorsque la première feuille 3 sera thermoformée et assemblée au deuxième renfort 8.

Comme indiqué plus haut, la fixation de la première feuille 3 avec le premier renfort 7 et avec le deuxième renfort 8 se fait avantageusement par collage. Il est particulièrement avantageux d'utiliser un thermo-adhésif afin de coller la première feuille 3 avec les renforts lorsque la première feuille 3 a été chauffée en vue de sa déformation. Il est particulièrement avantageux d'utiliser un revêtement thermo-adhésif formé sur la première feuille 3 et/ou sur le premier renfort 7 et/ou sur le deuxième renfort 8.

La couche en matériau adhésif 20' peut être formée par une multicouche ou une monocouche, notamment elle peut être formée par exemple de polyéthylène dont, en particulier, celui commercialisé par la société DUPONT DE NEMOURS, France, sous la marque SURLYN®, de polypropylène, d'éthylène-acétate de vinyle, de poly(téréphtalate d'éthylène), de polyamide, d'éthylène-alcool vinylique, de polystyrène, d'acide polylactique et leurs dérivés. Préférentiellement, la couche en matériau adhésif 20' est un revêtement thermo-adhésif dont la température d'activation est avantageusement comprise entre 60 °C et 120 °C.

Selon un mode de réalisation illustré à la figure 5, il est avantageux de placer la couche adhésive 20' sur le premier renfort 7 et sur le deuxième renfort 8 et d'avoir une première feuille 3 dépourvue d'adhésif. Ce mode de réalisation avantageux permet, notamment lorsque la feuille thermoformable est en plastique transparent, d'obtenir une surface latérale transparente alors que les faces latérales comportant de l'adhésif sont translucides. Ainsi, l'espace 9 entre les premier 7 et deuxième 8 renforts permet de pouvoir facilement visualiser le produit 2 destiné à être, par exemple, conditionné dans le support.

Selon les modes de réalisation, le support peut être un contenant destiné à maintenir une denrée alimentaire dans la cavité. Il est également possible de former un support qui est un couvercle qui referme un contenant par exemple par encastrement. Il est donc possible d'avoir une barquette de conditionnement dont le contenant est réalisé comme indiqué ci-dessus et/ou le couvercle qui est réalisé par l'un des différents modes de réalisation présentés. Dans le cas d'un couvercle, le maintien de la forme initiale permet de refermer le contenant associé.

Dans un mode de réalisation particulier, le premier renfort 8 et/ou le deuxième renfort 8 sont réalisés dans un matériau polymère qui est différent du matériau utilisé pour former la première feuille 3. Il est avantageux de réaliser les renforts 7 et/ou 8 dans un matériau thermoformable afin de bien épouser les formes du moule. Le matériau utilisé pour former les renforts 7 et/ou 8 peut être configuré pour être plus transparent, plus résistant à la déformation et/ou plus étanche que le matériau utilisé pour former la première feuille 3. De manière particulièrement avantageuse, le matériau formant les renforts 7 et/ou 8 est plus facilement recyclable que le matériau formant la première feuille 3.

Lorsque les renforts sont en matériau polymère, la première feuille 3 est chauffée à une température supérieure à la température de transition vitreuse de la première feuille 3 et inférieure à la température de transition vitreuse du matériau formant les renforts ou inférieure à la température de dégradation du matériau formant les renforts. Le matériau formant la première feuille présente une température de transition vitreuse qui est inférieure à la température de transition vitreuse du matériau formant les renforts ou au moins inférieure à la température de dégradation du matériau formant les renforts.

## Revendications

1. Support de conditionnement (1) pour denrées alimentaires comportant :
- une première feuille (3) en matériau thermoformable possédant des première et deuxième faces opposées et définissant une forme tridimensionnelle comportant au moins une cavité, la cavité étant définie par au moins un fond (6), au moins une paroi latérale (5) et un rebord périphérique supérieur (4) ;
support de conditionnement (1) **caractérisé en ce qu'**il comporte
- un premier renfort (7) fixé au rebord périphérique supérieur (4),
- un deuxième renfort (8) fixé au fond (6), le deuxième renfort (8) étant dépourvu de contact avec le premier renfort (7).

2. Support de conditionnement (1) pour denrées alimentaires selon la revendication précédente dans lequel la première feuille (3) est réalisée en matériau polymère et les premier et deuxième renforts (7, 8) sont réalisés dans un matériau choisi parmi le carton, le métal et le bois ou un mélange de ces matériaux et notamment un mélange de plastique et de bois ou un mélange de plastique et de carton.

3. Support de conditionnement (1) pour denrées alimentaires selon l'une quelconque des revendications précédentes dans lequel le premier renfort (7) est configuré pour recouvrir partiellement la au moins une paroi latérale (5) et dans lequel le premier renfort (7) est fixé à la au moins une paroi latérale (5).

4. Support de conditionnement (1) pour denrées alimentaires selon l'une quelconque des revendications précédentes dans lequel le deuxième renfort (8) est configuré pour recouvrir partiellement la au moins une paroi latérale (5) et dans lequel le deuxième renfort (8) est fixé à la au moins une paroi latérale (5).

5. Barquette ou plateau de conditionnement pour denrée alimentaire dans lequel la barquette comporte un contenant et un couvercle et le contenant et/ou le couvercle sont formés par un support de conditionnement (1) selon l'une quelconque des revendications précédentes et dans lequel les premier et deuxième renforts (7, 8) sont séparés de la denrée alimentaire par la première feuille (3) ou dans lequel le plateau est formé par un support de conditionnement (1) selon l'une quelconque des revendications précédentes.

6. Procédé de réalisation d'un support (1) de conditionnement comportant les étapes suivantes :
a) fournir une première feuille (3) en matériau thermoformable;
b) fournir un moule (11) définissant une première forme tridimensionnelle ;
c) chauffer la première feuille (3) et déformer la première feuille (3) au moyen de la première forme tridimensionnelle du moule (11) de manière à définir une cavité dans la première feuille (3), la cavité étant définie par un fond (6), au moins une paroi latérale (5) et un rebord périphérique supérieur (4) ;
procédé **caractérisé en ce qu'**on fournit un premier renfort (7) et un deuxième renfort (8), **en ce qu'**une première face de la première feuille (3) et/ou une première face du premier renfort (7) et/ou une première face du deuxième renfort (8) comportent un adhésif,
**en ce que** le premier renfort (7) est fixé à la première feuille (3) avant la déformation de la première feuille (3) ou durant la déformation de la première feuille (3) pour recouvrir le rebord périphérique supérieur (4) et
**en ce que** le deuxième renfort (8) est fixé à la première feuille (3) avant la déformation de la première feuille (3) ou durant la déformation de la première feuille (3) pour recouvrir le fond (6), le deuxième renfort (8) étant distinct du premier renfort (7).

7. Procédé de réalisation d'un support (1) de conditionnement selon la revendication précédente dans lequel :
- le premier renfort (7) et le deuxième renfort (8) forment une deuxième feuille (20), le deuxième renfort (8) étant monté amovible par rapport au premier renfort (7) au moyen d'au moins une ligne de fracture (14),
- l'étape de déformation est configurée pour ouvrir la ligne de fracturation et séparer le premier renfort (7) et le deuxième renfort (8).

8. Procédé de réalisation d'un support (1) de conditionnement selon la revendication 7 dans lequel le moule (11) comporte un élément mobile depuis une première position jusqu'à une deuxième position et dans lequel l'élément mobile déforme la première feuille (3) et la deuxième feuille (20) dans un même mouvement allant de la première position à la deuxième position.

9. Procédé de réalisation d'un support (1) de conditionnement selon l'une quelconque des revendications 7 et 8 dans lequel la au moins une ligne de fracture (14) est configurée pour dissocier complètement la au moins deuxième région amovible de la première région lors de la déformation de la deuxième feuille (20).

10. Procédé de réalisation d'un support (1) de conditionnement selon l'une des revendications 8 et 9 dans lequel la deuxième feuille (20) est fixée à la première feuille (3) avant l'étape de déformation et est disposée de sorte que le deuxième renfort (8) issu de la deuxième feuille (20) soit disposé à l'intérieur de la cavité définie dans la première feuille (3) après l'étape de déformation.

11. Procédé de réalisation d'un support (10) de conditionnement selon l'une quelconque des revendications 8 et 9 dans lequel la deuxième feuille (20) est fixée à la première feuille (3) avant l'étape de déformation et est disposée de sorte que le deuxième renfort (8) issu de la deuxième feuille (20) soit disposé à l'extérieur de la cavité définie dans la première feuille (3) après l'étape de déformation.

12. Procédé de réalisation d'un support (10) de conditionnement selon l'une quelconque des revendications 7 à 11 dans lequel la deuxième feuille (20) comporte une première ligne de fracture privilégiée (14) configurée pour dissocier mécaniquement le premier renfort (7) et le deuxième renfort (8) et une pluralité de lignes de fractures additionnelles (14') configurées pour former des parois de renfort recouvrant la au moins une paroi latérale (5).

13. Procédé de réalisation d'un support (1) de conditionnement selon l'une quelconque des revendications 6 à 12 dans lequel la première feuille (3) est réalisée dans un matériau ayant une première température de transition vitreuse inférieure à la température de transition vitreuse ou à la température de dégradation de la deuxième feuille (20) et en ce que la première feuille (3) est chauffée à une température supérieure à la première température de transition vitreuse et inférieure à la deuxième température de transition vitreuse ou à la température de dégradation.

14. Procédé de réalisation d'un support (1) de conditionnement selon l'une quelconque des revendications 6 à 13 dans lequel le support est un contenant pour denrées alimentaires.

15. Procédé de réalisation d'un support (1) de conditionnement selon l'une quelconque des revendications 6 à 14 dans lequel le support est un couvercle destiné à fermer un contenant pour denrées alimentaires.

## Patentansprüche

1. Verpackungsträger (1) für Nahrungsmittel, umfassend:
- eine erste Folie (3) aus einem thermoformbaren Material, umfassend erste und zweite entgegengesetzt liegende Seiten, die eine dreidimensionale Form definieren, umfassend mindestens einen Hohlraum, wobei der Hohlraum durch mindestens einen Boden (6), mindestens eine Seitenwand (5) und einen oberen Umfangsrand (4) definiert ist;
wobei der Verpackungsträger (1) **dadurch gekennzeichnet ist, dass** er umfasst:
- eine erste Verstärkung (7), die am oberen Umfangsrand (4) befestigt ist,
- eine zweite Verstärkung (8), die am Boden (6) befestigt ist, wobei die zweite Verstärkung (8) keinen Kontakt mit der ersten Verstärkung (7) hat.

2. Verpackungsträger (1) für Nahrungsmittel nach dem vorhergehenden Anspruch, bei dem die erste Folie (3) aus einem Polymermaterial hergestellt ist, und die erste und zweite Verstärkung (7, 8) aus einem Material hergestellt sind, das ausgewählt ist unter Karton, Metall und Holz oder einer Mischung dieser Materialien und insbesondere einer Mischung aus Kunststoff und Holz oder einer Mischung aus Kunststoff und Karton.

3. Verpackungsträger (1) für Nahrungsmittel nach einem der vorhergehenden Ansprüche, bei dem die erste Verstärkung (7) eingerichtet ist, um die mindestens eine Seitenwand (5) zumindest teilweise abzudecken, und bei dem die erste Verstärkung (7) an der mindestens einen Seitenwand (5) befestigt ist.

4. Verpackungsträger (1) für Nahrungsmittel nach einem der vorhergehenden Ansprüche, bei dem die zweite Verstärkung (8) eingerichtet ist, um die mindestens eine Seitenwand (5) zumindest teilweise abzudecken, und bei dem die zweite Verstärkung (8) an der mindestens einen Seitenwand (5) befestigt ist.

5. Verpackungsschale oder -platte für Nahrungsmittel, wobei die Schale einen Behälter und einen Deckel umfasst, wobei der Behälter und/oder der Deckel von einem Verpackungsträger (1) nach einem der vorhergehenden Ansprüche gebildet sind, und wobei die ersten und zweiten Verstärkungen (7, 8) von dem Nahrungsmittel durch eine erste Folie (3) getrennt sind, oder wobei die Platte von einem Verpackungsträger (1) nach einem der vorhergehenden Ansprüche gebildet ist.

6. Verfahren zur Herstellung eines Verpackungsträgers (1), umfassend die folgenden Schritte:
a) Bereitstellen einer ersten Folie (3) aus thermoformbarem Material;
b) Bereitstellen einer Gussform (11), die eine erste dreidimensionale Form definiert;
c) Erhitzen der ersten Folie (3) und Verformen der ersten Folie (3) mit Hilfe der ersten dreidimensionalen Form der Gussform (11), um einen Hohlraum in der ersten Folie (3) zu definieren, wobei der Hohlraum durch einen Boden (6), mindestens eine Seitenwand (5) und einen oberen Umfangsrand (4) definiert ist;
wobei das Verfahren **dadurch gekennzeichnet ist, dass** eine erste Verstärkung (7) und eine zweite Verstärkung (8) bereitgestellt werden, dass eine erste Seite der ersten Folie (3) und/oder eine erste Seite der ersten Verstärkung (7) und/oder eine erste Seite der zweiten Verstärkung (8) ein Haftmittel umfassen,
dass die erste Verstärkung (7) an der ersten Folie (3) vor der Verformung der ersten Folie (3) oder während der Verformung der ersten Folie (3) befestigt wird, um den oberen Umfangsrand (4) abzudecken, und
dass die zweite Verstärkung (8) an der ersten Folie (3) vor der Verformung der ersten Folie (3) oder während der Verformung der ersten Folie (3) befestigt wird, um den Boden (6) abzudecken, wobei sich die zweite Verstärkung (8) von der ersten Verstärkung (7) unterscheidet.

7. Verfahren zur Herstellung eines Verpackungsträgers (1) nach dem vorhergehenden Anspruch, bei dem:
- die erste Verstärkung (7) und die zweite Verstärkung (8) eine zweite Folie (20) bilden, wobei die zweite Verstärkung (8) in Bezug zur ersten Verstärkung (7) mit Hilfe mindestens einer Bruchlinie (14) lösbar montiert ist,
- der Verformungsschritt eingerichtet ist, um die Bruchlinie zu öffnen und die erste Verstärkung (7) und die zweite Verstärkung (8) zu trennen.

8. Verfahren zur Herstellung eines Verpackungsträgers (1) nach Anspruch 7, bei dem die Form (11) ein von einer ersten Position in eine zweite Position bewegliches Element umfasst, und bei dem das bewegliche Element die erste Folie (3) und die zweite Folie (20) in einer selben Bewegung von der ersten Position in die zweite Position verformt.

9. Verfahren zur Herstellung eines Verpackungsträgers (1) nach einem der Ansprüche 7 und 8, bei dem die mindestens eine Bruchlinie (14) eingerichtet ist, um den mindestens einen zweiten lösbaren Bereich von dem ersten Bereich bei der Verformung der zweiten Folie (20) vollständig zu trennen.

10. Verfahren zur Herstellung eines Verpackungsträgers (1) nach einem der Ansprüche 8 und 9, bei dem die zweite Folie (20) an der ersten Folie (3) vor dem Verformungsschritt befestigt und derart angeordnet wird, dass die zweite Verstärkung (8), die sich aus der zweiten Folie (20) ergibt, innerhalb des Hohlraums, der in der ersten Folie (3) definiert ist, nach dem Verformungsschritt angeordnet wird.

11. Verfahren zur Herstellung eines Verpackungsträgers (10) nach einem der Ansprüche 8 und 9, bei dem die zweite Folie (20) an der ersten Folie (3) vor dem Verformungsschritt befestigt und derart angeordnet wird, dass die zweite Verstärkung (8), die sich aus der zweiten Folie (20) ergibt, außerhalb des Hohlraums, der in der ersten Folie (3) definiert ist, nach dem Verformungsschritt angeordnet wird.

12. Verfahren zur Herstellung eines Verpackungsträgers (10) nach einem der Ansprüche 7 bis 11, bei dem die zweite Folie (20) eine erste bevorzugte Bruchlinie (14), die eingerichtet ist, um die erste Verstärkung (7) und die zweite Verstärkung (8) mechanisch zu trennen, und eine Vielzahl von zusätzlichen Bruchlinien (14') umfasst, die eingerichtet sind, um Verstärkungswände zu bilden, die die mindestens eine Seitenwand (5) abdecken.

13. Verfahren zur Herstellung eines Verpackungsträgers (1) nach einem der Ansprüche 6 bis 12, bei dem die erste Folie (3) aus einem Material hergestellt ist, das eine erste Glasübergangstemperatur unter der Glasübergangstemperatur oder der Zersetzungstemperatur der zweiten Folie hat, und dass die erste Folie (3) auf eine Temperatur über der ersten Glasübergangstemperatur und unter der zweiten Glasübergangstemperatur oder der Zersetzungstemperatur erhitzt wird.

14. Verfahren zur Herstellung eines Verpackungsträgers (1) nach einem der Ansprüche 6 bis 13, bei dem der Träger ein Behälter für Nahrungsmittel ist.

15. Verfahren zur Herstellung eines Verpackungsträgers (1) nach einem der Ansprüche 6 bis 14, bei dem der Träger ein Deckel ist, der dazu bestimmt ist, einen Behälter für Nahrungsmittel zu verschließen.

## Claims

1. Packaging medium (1) for foodstuffs comprising:
- a first sheet (3) made from thermoformable material having opposite first and second surfaces and defining a three-dimensional shape comprising at least one cavity, the cavity being defined by at least a base (6), at least one side wall (5) and a top peripheral edge (4);
packaging medium (11) **characterised in that** it comprises:
- a first reinforcement (7) fixed to the top peripheral edge (4),
- a second reinforcement (8) fixed to the base (6), the second reinforcement (8) being devoid of any contact with the first reinforcement (7).

2. Packaging medium (1) for foodstuffs according to the foregoing claim wherein the first sheet (3) is made from polymer material and the first and second reinforcements (7, 8) are made from a material chosen from cardboard, metal and wood or a mixture of these materials and in particular a mixture of plastic and wood or a mixture of plastic and cardboard.

3. Packaging medium (1) for foodstuffs according to either one of the foregoing claims wherein the first reinforcement (7) is configured to partially cover the at least one side wall (5) and wherein the first reinforcement (7) is fixed to the at least one side wall (5).

4. Packaging medium (1) for foodstuffs according to any one of the foregoing claims wherein the second reinforcement (8) is configured to partially cover the at least one side wall (5) and wherein the second reinforcement (8) is fixed to the at least one side wall (5).

5. Packaging tray or plate for foodstuffs wherein the tray comprises a container and a lid and the container and/or the lid are formed by a packaging medium (1) according to any one of the foregoing claims and wherein the first and second reinforcements (7, 8) are separated from the foodstuff by the first sheet (3) or wherein the plate is formed by a packaging medium (1) according to any one of the foregoing claims.

6. Method for producing a packaging medium (1) comprising the following steps:
a) providing a first sheet (3) made from thermoformable material;
b) providing a mould (11) defining a first three-dimensional shape;
c) heating the first sheet (3) and deforming the first sheet (3) by means of the first three-dimensional shape of the mould (11) so as to define a cavity in the first sheet (3), the cavity being defined by a base (6), at least one side wall (5) and a top peripheral edge (4);
method **characterised in that** a first reinforcement (7) and a second reinforcement (8) are provided, **in that** a first surface of the first sheet (3) and/or a first surface of the first reinforcement (7) and/or a first surface of the second reinforcement (8) comprise an adhesive,
**in that** the first reinforcement (7) is fixed to the first sheet (3) before deformation of the first sheet (3) or during deformation of the first sheet (3) so as to cover the top peripheral edge (4) and
**in that** the second reinforcement (8) is fixed to the first sheet (3) before deformation of the first sheet (3) or during deformation of the first sheet (3) so as to cover the base (6), the second reinforcement (8) being distinct from the first reinforcement (7).

7. Method for producing a packaging medium (1) according to the foregoing claim wherein:
- the first reinforcement (7) and the second reinforcement (8) form a second sheet (20), the second reinforcement (8) being fitted removable with respect to the first reinforcement (7) by means of at least one break line (14),
- the deformation step is configured to open up the break line and separate the first reinforcement (7) and the second reinforcement (8).

8. Method for producing a packaging medium (1) according to claim 7 wherein the mould (11) comprises a movable part that is movable from a first position to a second position and wherein the movable part deforms the first sheet (3) and the second sheet (20) in one and the same movement from the first position to the second position.

9. Method for producing a packaging medium (1) according to either one of claims 7 and 8 wherein the at least one break line (14) is configured to completely dissociate the at least second removable region from the first region when deformation of the second sheet (20) takes place.

10. Method for producing a packaging medium (1) according to one of claims 8 and 9 wherein the second sheet (20) is fixed to the first sheet (3) before the deformation step and is arranged in such a way that the second reinforcement (8) derived from the second sheet (20) is located inside the cavity defined in the first sheet (3) after the deformation step.

11. Method for producing a packaging medium (10) according to either one of claims 8 and 9 wherein the second sheet (20) is fixed to the first sheet (3) before the deformation step and is arranged in such a way that the second reinforcement (8) derived from the second sheet (20) is located outside the cavity defined in the first sheet (3) after the deformation step.

12. Method for producing a packaging medium (10) according to any one of claims 7 to 11 wherein the second sheet (20) comprises a preferential first break line (14) configured to mechanically dissociate the first reinforcement (7) and the second reinforcement (8) and a plurality of additional break lines (14') configured to form strengthening walls covering the at least one side wall (5).

13. Method for producing a packaging medium (1) according to any one of claims 6 to 12 wherein the first sheet (3) is made from a material having a first glass transition temperature that is lower than the glass transition temperature or than the degradation temperature of the second sheet (20) and in that the first sheet (3) is heated to a temperature that is higher than the first glass transition temperature and lower than the second glass transition temperature or than the degradation temperature.

14. Method for producing a packaging medium (1) according to any one of claims 6 to 13 wherein the medium is a foodstuff container.

15. Method for producing a packaging medium (1) according to any one of claims 6 to 14 wherein the medium is a lid designed to close a foodstuff container.
